# FASCICULE DE BREVET EUROPEEN

(11) **EP 3 394 487 B1**
(45) Date de publication et mention de la délivrance du brevet: **20.11.2019**
(21) Numéro de dépôt: 16826415.8
(22) Date de dépôt: 20.12.2016
(51) Int. Cl.: F16K 17/04, B01D 35/147

(54) **SOUPAPE DIFFERENTIELLE POUR CONDUITE TUBULAIRE FLEXIBLE SOUS-MARINE**
DIFFERENTIALVENTIL FÜR FLEXIBLES UNTERWASSERROHR
DIFFERENTIAL VALVE FOR UNDERWATER FLEXIBLE TUBULAR PIPE

(30) Priorité: 21.12.2015 FR 1562958
(43) Date de publication de la demande: 31.10.2018
(73) Titulaire: Technip France, 92400 Coubevoie (FR)
(72) Inventeur: LAAF, Fred, CEP 24220-260 Rio de Janeiro (BR); SIMON, Nicolas, 76480 Sainte-Marguerite-sur-Duclair (FR); CHAUDET, Guillaume, 76770 Malaunay (FR); BLICQ, Serge, 59261 Wahagnies (FR)
(74) Mandataire: Fédit-Loriot
(86) Numéro de dépôt international: PCT/FR2016/053579
(87) Numéro de publication internationale: WO 2017/109387

(56) Documents cités:
- EP-A1- 0 991 887
- US-B1- 6 371 088

## Description

La présente invention concerne une soupape différentielle pour conduite tubulaire flexible sous-marine et, plus particulièrement, une soupape à deux clapets apte à évacuer du gaz, par exemple contenu dans un fluide sous pression circulant dans la conduite flexible.

Les conduites tubulaires flexibles ici concernées sont les conduites non liées telles que décrites dans les normes API 17J « Spécification for Unbonded Flexible Pipe » et API RP 17B « Recommend Practice for Flexible Pipe » publiées par l'American Petroleum Institute (API), auxquelles on pourra se reporter.

Ces conduites tubulaires flexibles utilisées dans le domaine de l'exploitation pétrolière en mer sont destinées au transport des fluides et notamment des hydrocarbures. Elles comprennent au moins un tube interne flexible en matériau polymère, plus communément dénommé gaine interne de pression, dans lequel s'écoulent lesdits hydrocarbures. Les conduites comportent une gaine externe également en matériau polymère et des nappes de renfort, ou armatures, par exemple en matériau métallique ou à base de fibres synthétiques, situées dans la zone annulaire, entre la gaine interne de pression et la gaine externe.

Les conduites peuvent comporter une carcasse en matériau métallique disposée à l'intérieur de la gaine de pression en fonction de leur destination et notamment en fonction de leurs conditions de service et du fluide transporté.

De surcroît, elles sont susceptibles de comporter une gaine, dite gaine intermédiaire située dans la zone annulaire.

Bien que la gaine interne de pression soit étanche aux hydrocarbures, un certain nombre de gaz et de molécules que ces hydrocarbures contiennent sont susceptibles de diffuser à travers la paroi de ladite gaine interne de pression en fonction du matériau qui la constitue, de la concentration desdits gaz et molécules dans les hydrocarbures et des conditions locales, notamment de pression et de température. Ces gaz, qui traversent par perméabilité la paroi de la gaine interne de pression, diffusent dans la zone annulaire de la conduite flexible.

Afin d'éviter l'accumulation de ces gaz dans la zone annulaire et ainsi une surpression dans cette zone annulaire, qui pourrait provoquer l'éclatement du revêtement extérieur ou l'effondrement de la carcasse et partant, la ruine de la conduite, les gaz doivent être évacués vers l'extérieur dans le milieu ambiant. De plus, la présence de ces gaz, couplée à la présence d'eau condensée dans la zone annulaire, est susceptible de corroder les éléments des nappes de renforts situées dans l'annulaire, qui sont généralement en acier. C'est pourquoi, il est important de s'assurer que les gaz qui diffusent dans l'annulaire soient régulièrement évacués dans le milieu ambiant.

Pour l'évacuation de ces gaz, il est connu d'utiliser une soupape de drainage, montée au niveau de l'une au moins des extrémités de la conduite, par exemple au niveau d'un embout de connexion terminal de la conduite, un côté de ladite soupape communiquant avec la zone annulaire alors que l'autre côté communique avec le milieu ambiant, qui peut être soit l'atmosphère, lorsque la soupape est montée à l'extrémité de la conduite située au-dessus de la surface de l'eau, soit l'eau de mer lorsque la soupape est montée au niveau de l'extrémité immergée de la conduite flexible.

De telles soupapes sont agencées pour s'ouvrir et se refermer à des pressions différentielles déterminées entre la zone annulaire et le milieu ambiant. Ainsi, lorsque la pression interne régnant dans la zone annulaire est supérieure d'une certaine valeur à la pression régnant à l'extérieur de la conduite flexible, la soupape s'ouvre permettant d'évacuer les gaz ayant diffusés dans la zone annulaire vers l'extérieur, et se referme rapidement pour qu'aucun fluide ne pénètre dans la zone annulaire. Les soupapes utilisées dans ce contexte s'ouvrent pour une pression différentielle pouvant varier entre 1 et 4 bars, par exemple 2 ou 3 bars ± 0,5 bar.

Ainsi, comme expliqué ci-dessus, l'évacuation des gaz vers le milieu ambiant nécessite des phases d'ouverture-fermeture successives de la soupape, intervenant pendant toute la durée de service de la conduite flexible. Aussi, au fil de cette durée de service, des impuretés telles que du sable et/ou des organismes marins sont susceptibles de s'introduire dans le corps de soupape, en particulier lorsque la soupape se trouve à proximité du fond de la mer et peuvent, à terme, provoquer une usure prématurée des éléments constitutifs de la soupape et même nuire au bon fonctionnement de la soupape.

On connaît du document de brevet EP 0 991 887, une soupape différentielle comportant un système d'évacuation des gaz à double clapets, présentant un corps de soupape dans lequel est ménagée une chambre interne en deux parties, respectivement une partie inférieure destinée à communiquer avec l'annulaire via un passage de communication inférieur et une partie supérieure destinée à communiquer avec l'extérieur via un passage de communication supérieur. Des premier et deuxième clapets sont montés de façon coaxiale dans la chambre interne suivant l'axe du corps de soupape, respectivement dans les passages de communication inférieur et supérieur. Dès l'ouverture du premier clapet sous l'effet de la différence de pression entre la zone annulaire et la chambre interne, le deuxième clapet monté en alignement avec le premier s'ouvre également. Puis, lors de la fermeture du deuxième clapet en fonction de la différence de pression régnant dans la chambre interne et dans le milieu ambiant, le deuxième clapet n'étant pas étanche sur son siège, il se forme des bulles de gaz entre le deuxième clapet et son siège, de sorte que lesdites bulles constituent une barrière à la pénétration de l'eau ou de particules solides dans la chambre interne de la soupape.

Toutefois, ce système pourrait ne pas donner entière satisfaction. En particulier, il subsiste toujours un risque que le passage des bulles de gaz en surpression par rapport à la pression du milieu ambiant, lors de la fermeture du deuxième clapet, n'empêche pas complètement l'introduction d'eau ou de particules solides dans la chambre. En outre, si le passage de communication supérieur dans lequel est monté le deuxième clapet venait à être obstrué, les gaz ne pourraient plus s'échapper vers l'extérieur, au risque de s'accumuler dans la zone annulaire.

Aussi, il existe un besoin pour une soupape d'évacuation des gaz pour une conduite tubulaire flexible, qui soit fiable, compacte et résistante dans le temps.

A cet effet, la présente invention concerne une soupape différentielle pour conduite tubulaire flexible sous-marine destinée au transport des hydrocarbures, ladite soupape étant destinée à l'évacuation vers l'extérieur de la conduite des gaz diffusant dans une zone annulaire de la conduite, ladite soupape comprenant un corps de soupape comportant une partie inférieure apte à communiquer avec ladite zone annulaire par un passage de communication inférieur et une partie supérieure apte à communiquer avec l'extérieur par au moins un chemin d'évacuation des gaz, le corps de soupape comprenant une chambre interne dans laquelle sont montés mobiles d'une part, un clapet principal entre une position d'ouverture et une position de fermeture dudit passage de communication inférieur et, d'autre part, un clapet secondaire, monté coaxial au clapet principal et prenant appui sur un siège supérieur de clapet, entre une position d'ouverture et une position de fermeture dudit au moins un chemin d'évacuation, caractérisée en ce que ladite chambre interne communique avec l'extérieur de la conduite via un chemin d'évacuation principal des gaz vers l'extérieur, ledit chemin d'évacuation principal comportant une pièce poreuse servant de filtre, l'écoulement desdits gaz le long dudit chemin d'évacuation principal à travers ladite pièce poreuse étant indépendant de la position d'ouverture ou de fermeture dudit clapet secondaire.

Ainsi, un avantage de l'invention réside dans l'utilisation d'une pièce poreuse destinée à jouer le rôle de filtre, qui constitue, avec le clapet principal, un premier chemin d'évacuation des gaz vers l'extérieur, dit chemin d'évacuation principal, permettant d'assurer une évacuation contrôlée des gaz et, en particulier, d'éviter que des particules solides en suspension dans le milieu ambiant ne puisse pénétrer à l'intérieur du corps de soupape. En outre, le clapet secondaire, disposé dans le siège supérieur de clapet, qui est fermé en fonctionnement normal, est conçu pour s'ouvrir en cas de saturation de la pièce poreuse, formant ainsi, avec le clapet principal, un second chemin d'évacuation des gaz vers l'extérieur, dit chemin d'évacuation secondaire, ou de secours, permettant d'assurer l'évacuation des gaz vers l'extérieur malgré la saturation de la pièce poreuse. La saturation de la pièce poreuse conduisant à l'obstruction du chemin d'évacuation principal peut résulter de l'obturation au moins partielle des pores de la pièce poreuse ou encore d'un débit de gaz excessif traversant la pièce poreuse. La soupape à double clapets selon l'invention comporte donc deux chemins distincts et parallèles d'évacuation des gaz vers l'extérieur de la conduite, un chemin d'évacuation principal formé par le clapet principal en position d'ouverture et la pièce poreuse, à travers lequel les gaz peuvent circuler indépendamment de la position d'ouverture ou de fermeture du clapet secondaire, et un chemin d'évacuation secondaire, ou de secours, formé par le clapet principal et le clapet secondaire, tous deux en position d'ouverture, en cas de saturation la pièce poreuse.

Avantageusement, ledit clapet secondaire coopère avec ledit siège supérieur de clapet de manière à ce que ledit clapet secondaire puisse s'ouvrir automatiquement en cas de saturation de ladite pièce poreuse, de sorte à former un chemin d'évacuation secondaire des gaz vers l'extérieur depuis ladite chambre interne vers l'extérieur de la conduite.

Selon un premier mode de réalisation, ladite pièce poreuse est fixe et solidaire dudit corps de soupape.

Avantageusement, ladite pièce poreuse peut former au moins en partie ledit siège supérieur de clapet.

Avantageusement, ledit clapet principal est sollicité vers la position de fermeture par un ressort principal logé à l'intérieur d'un siège inférieur de clapet conique pour le clapet principal, ledit ressort principal prenant appui par une extrémité sur une bague de ressort solidaire d'une partie inférieure du clapet principal et par l'autre extrémité sur un épaulement ménagé à l'intérieur du siège inférieur de clapet conique.

De préférence, ledit ressort principal est guidé en mouvement par sa périphérie extérieure, par contact radial avec une paroi interne d'une partie inférieure cylindrique dudit siège inférieur de clapet conique, dans laquelle ledit ressort principal est logé.

Avantageusement, ledit clapet secondaire est sollicité vers la position de fermeture par un ressort secondaire prenant appui par une extrémité sur une bague de ressort solidaire d'une partie inférieure du clapet secondaire et par l'autre extrémité sur un épaulement ménagé dans une ouverture centrale dudit siège supérieur de clapet dans laquelle est monté ledit clapet secondaire.

De préférence, ledit ressort secondaire est guidé en mouvement par sa périphérie extérieure, par contact radial avec une paroi interne d'un support cylindrique monté sous ledit siège supérieur de clapet, dans lequel ledit ressort secondaire est logé.

Selon un deuxième mode de réalisation, ladite pièce poreuse est montée solidaire dudit clapet secondaire.

Avantageusement, ledit chemin d'évacuation principal s'étend au moins en partie à l'intérieur du corps dudit clapet secondaire. Ainsi, ledit chemin d'évacuation principal est ménagé partiellement à travers le corps dudit clapet secondaire.

Selon ce deuxième mode de réalisation, ladite pièce poreuse est agencée dans un espace annulaire ménagé dans la tête dudit clapet secondaire.

De manière avantageuse, la pièce poreuse est réalisé en matériau métallique, avantageusement encore, elle est réalisée à partir d'un alliage de nickel, notamment à partir d'une composition d'un alliage de nickel-cuivre tel que défini par les document normatifs ASTM B165 (ou UNS N04400) « Standard Spécification for Nickel-Copper Alloy Seamless Pipe and Tube » et ASTM B164 « Standard Spécification for Nickel-Copper Alloy Rod, Bar and Wire » et, préférentiellement, elle est réalisée en Monel® 400.

L'invention concerne également une conduite tubulaire flexible sous-marine destinée au transport des hydrocarbures comprenant au moins une gaine interne de pression adaptée à véhiculer lesdits hydrocarbures, des gaz contenus dans lesdits hydrocarbures étant susceptibles de diffuser à travers la paroi de ladite gaine interne de pression, et comprenant une gaine externe et au moins une nappe de renfort située dans une zone annulaire comprise entre ladite gaine externe et ladite gaine interne de pression, ladite conduite comprenant un embout de connexion terminal pourvu d'un orifice d'évacuation des gaz au sein duquel est monté une soupape selon l'invention.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 illustre une vue en coupe longitudinale d'une soupape différentielle conforme à l'invention, selon un premier mode de réalisation ;
- les Figures 2a-2c illustrent une vue en coupe longitudinale d'une soupape différentielle conforme à l'invention, selon un deuxième mode de réalisation ;
- la Figure 2d illustre une vue en coupe longitudinale de la soupape différentielle selon les figures 2a-2c, selon une variante de réalisation.
- la Figure 3 illustre schématiquement le fonctionnement de la soupape conforme à l'invention.

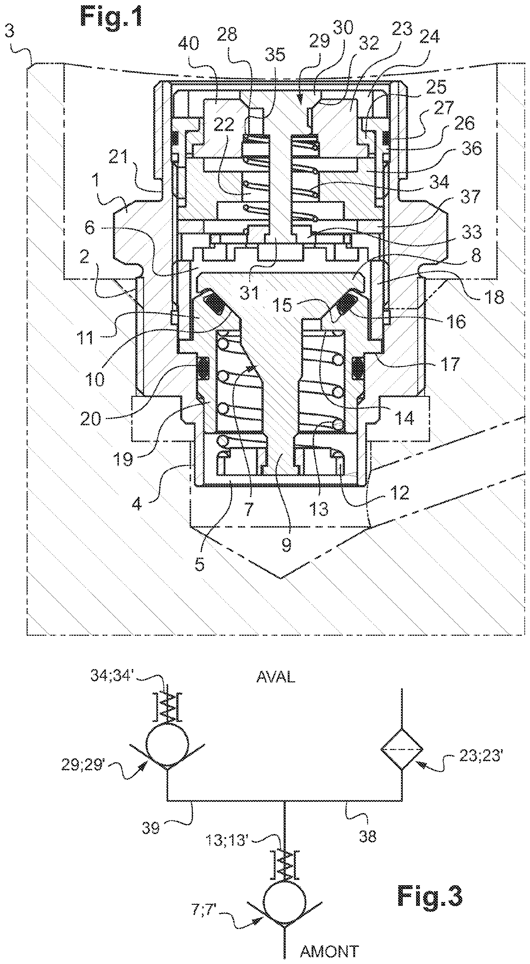

En référence à la figure 1, la soupape différentielle comprend un corps de soupape 1, pourvu d'un filetage externe 2 pour être vissé sur un élément correspondant 3 d'une conduite tubulaire flexible, par exemple un embout de connexion terminal de la conduite, au niveau d'un orifice d'évacuation des gaz dont est pourvu l'embout. La conduite tubulaire flexible, non représentée, comporte au moins une gaine interne de pression, adaptée à véhiculer des hydrocarbures, des gaz contenus dans les hydrocarbures étant susceptibles de diffuser à travers la paroi de la gaine interne de pression dans une zone annulaire de la conduite comprise entre la gaine interne et une gaine d'étanchéité externe, où sont situées une ou plusieurs nappes de renfort ou armatures de renforcement.

Dans une partie inférieure 4 du corps de soupape 1, est ménagé un passage de communication inférieur 5, qui relie une chambre interne 6 agencée dans le corps de soupape 1, à l'intérieur de la conduite flexible et plus précisément à la zone annulaire de ladite conduite flexible dans laquelle diffusent les gaz à évacuer. La chambre interne 6 comprend un clapet principal 7 monté mobile dans le passage de communication inférieur, qui peut être ouvert ou fermé en fonction de la différence de pression entre ladite zone annulaire et la chambre interne. Plus précisément, le clapet principal 7 comprend une tête 8 cylindro-conique et une base ou partie inférieure 9 reliées par une tige. La partie conique 10 de la tête 8 prend appui, en position de fermeture du clapet principal 7, sur un siège inférieur de clapet conique 11 fixé à l'intérieur du corps de soupape 1. La base 9 du clapet principal 7 est fixée à une bague de ressort 12, sur laquelle prend appui, par une extrémité, un ressort principal 13 destiné à solliciter le clapet principal 7 vers sa position de fermeture, ledit ressort principal 13 prenant appui, par son autre extrémité, sur un épaulement 14 ménagé à l'intérieur du siège inférieur de clapet conique 11. Le ressort principal 13 est donc logé à l'intérieur du siège inférieur de clapet conique 11 en prenant appui par une extrémité sur la bague de ressort 12 solidaire de la base 9 du clapet principal 7 et par l'autre extrémité sur l'épaulement 14 ménagé à l'intérieur du siège inférieur de clapet conique 11.

De façon générale, le tarage du ressort principal 13 et la section du clapet principal 7 sont déterminés pour que l'ouverture du clapet principal 7 soit effective dès que la différence de pression entre la pression régnant dans la zone annulaire de la conduite et la pression régnant dans la chambre interne de la soupape devient égale à 1 bar ± 0,5 bar. Cette pression différentielle d'ouverture du clapet principal 7 de la soupape égale à sensiblement 1 bar, permet de minimiser les risques de surpression dans la zone annulaire et donc, de minimiser, entre autre, les risques d'éclatement de la gaine externe. Il est alors possible de réduire l'épaisseur de cette dernière et ce, même pour des conduites utilisées pour des applications de grandes profondeurs (3000 mètres et plus), ce qui permet avantageusement d'alléger la structure de la conduite et de réduire les coûts de fabrication.

Le siège inférieur de clapet conique 11 comprend une gorge annulaire 15 ménagée sur une surface d'appui en regard de la partie conique 10 de la tête 8 du clapet principal 7. Un joint torique 16 est logé dans la gorge annulaire 15 de sorte à être en appui, pour la position de fermeture du clapet principal 7, sur la partie conique 10 de la tête 8 du clapet principal 7. Le joint 16 permet d'assurer un contact étanche de la tête 8 du clapet principal 7 sur le siège inférieur de clapet conique 11 en position de fermeture du clapet principal 7. Ainsi, le clapet principal 7 est apte à se refermer en réalisant une étanchéité suffisante grâce au joint torique 16.

Le siège inférieur de clapet conique 11 est fixé sur un épaulement intérieur 17 ménagé sur une paroi interne du corps de soupape 1, sur lequel il est maintenu par l'intermédiaire d'un écrou de maintien 18. Il comporte également une partie inférieure cylindrique 19, qui s'étend à l'opposé de la partie supérieure du siège sur laquelle vient en appui la tête 8 du clapet principal 7 et à l'intérieur de laquelle est logé le ressort principal 13, permettant un guidage en mouvement de ce dernier par sa périphérie extérieure, en particulier par contact radial avec une paroi interne de la partie inférieure cylindrique. Ainsi, le diamètre interne de la partie inférieure cylindrique 19 du siège inférieur de clapet conique 11, qui forme une partie de guidage du ressort principal 13, est sensiblement égal au diamètre externe du ressort principal 13, avec une tolérance suffisante pour permettre le déplacement axial du ressort principal 13 dans la partie inférieure cylindrique 19. Le guidage du mouvement du ressort principal assure une meilleure répétabilité des séquences d'ouverture-fermeture du clapet principal.

En outre, la partie inférieure cylindrique 19 vient en appui contre la paroi interne du corps de soupape 1 par l'intermédiaire d'un joint 20 logé dans une gorge annulaire ménagée dans la surface de la partie inférieure cylindrique 19 en regard de la paroi interne du corps de soupape 1. Ainsi, le siège inférieur de clapet conique 11 est monté de manière étanche sur le corps de soupape 1.

Dans une partie supérieure 21 du corps de soupape 1, la chambre interne 6 est prévue pour communiquer avec le milieu ambiant extérieur par l'intermédiaire d'un passage de communication central 22 apte à relier la chambre interne 6 au milieu ambiant extérieur. Un système d'évacuation des gaz est mis en place entre ce passage de communication et le milieu ambiant extérieur, constitué d'un système d'évacuation principal et d'un système d'évacuation secondaire, ou de secours, qui vont être décrits plus en détail.

Le système d'évacuation principal des gaz est formé d'une pièce poreuse 23, montée fixe et solidaire du corps de soupape en partie supérieure du corps de soupape 1 dans le passage de communication central de la chambre interne 6, par l'intermédiaire d'un écrou supérieur 24 et d'une bague isolante 25 entourant la pièce poreuse 23 afin de l'isoler électriquement du corps de soupape 1. Ladite bague isolante 25 est elle-même entourée d'un élément de support 26 rapporté de manière étanche par l'intermédiaire d'un joint 27 contre la paroi interne du corps de soupape 1. La pièce poreuse 23 joue un rôle d'élément filtrant, empêchant la pénétration de particules solides depuis l'extérieur vers l'intérieur de la soupape et permet une diffusion contrôlée du gaz vers l'extérieur à travers elle grâce à sa structure poreuse. La pièce poreuse 23 est avantageusement réalisée en un matériau métallique et est encore avantageusement réalisée à partir d'une composition d'alliage nickel-cuivre. Préférentiellement, la pièce poreuse 23 est réalisée en Monel® 400, de façon à procurer à ladite pièce poreuse métallique une grande résistance à la corrosion. En outre, la pièce poreuse métallique 23 permet aussi d'éviter la formation et la croissance de la faune marine au niveau de l'évacuation des gaz du corps de soupape 1.

En outre, la pièce poreuse métallique 23 comporte une ouverture centrale 28 ouverte vers l'extérieur et forme un siège supérieur de clapet 40 auquel est associé un clapet secondaire 29, constituant le système d'évacuation secondaire des gaz, et permettant d'empêcher le passage des gaz au travers de ladite ouverture centrale 28 en position de fermeture du clapet secondaire 29, et d'autoriser leur passage au travers de ladite ouverture centrale 28 en position d'ouverture du clapet secondaire 29. Aussi, le siège supérieur de clapet 40 pour le clapet secondaire 29 est formé au moins en partie de la pièce poreuse 23.

Le clapet secondaire 29 est monté mobile dans l'ouverture centrale 28 de la pièce poreuse métallique 23 par rapport au corps de soupape 1 et est monté coaxialement avec le clapet principal 7. Il comprend une tête 30 cylindro-conique et une base ou partie inférieure 31 reliées par une tige. La partie conique 32 de la tête 30 prend appui en position de fermeture sur une surface d'appui conique du siège supérieur de clapet. La base 31 du clapet secondaire 29 est fixée à une bague de ressort 33, sur laquelle prend appui, par une extrémité, un ressort secondaire 34 destiné à solliciter le clapet secondaire 29 vers sa position de fermeture, ledit ressort secondaire 34 prenant appui, par son autre extrémité, sur un épaulement 35 ménagé dans l'ouverture centrale 28 du siège supérieur de clapet. Le ressort secondaire 34 est préférentiellement logé à l'intérieur d'un support cylindrique 36 monté sous la pièce poreuse métallique 23, entre une rondelle d'appui 37 et la pièce poreuse métallique 23, permettant un guidage du mouvement du ressort secondaire 34 par sa périphérie extérieure, en particulier par contact radial avec une paroi cylindrique interne du support cylindrique 36. Ainsi, le diamètre interne du support de guidage 36 est sensiblement égal au diamètre externe du ressort secondaire 34, avec une tolérance suffisante pour permettre le déplacement axial du ressort principal secondaire 34 dans le support de guidage 36. Tout comme pour le ressort principal, le guidage du mouvement du ressort secondaire 34 assure une meilleure répétabilité des séquences d'ouverture-fermeture du clapet secondaire 29.

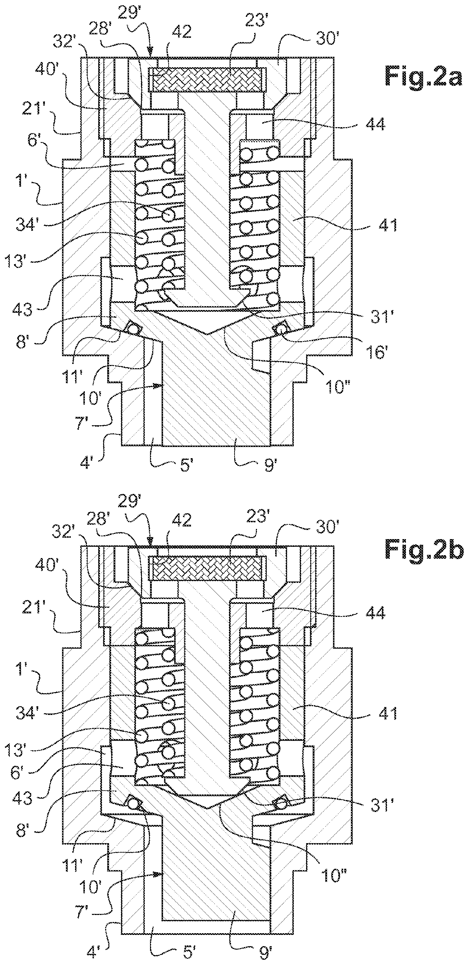

Suivant le premier mode de réalisation décrit à la figure 1, la pièce poreuse est une pièce fixe, indépendante du clapet secondaire 29. Les figures 2a-2c illustrent un deuxième mode de réalisation de la soupape, dans lequel la pièce poreuse est cette fois montée mobile par rapport au corps de soupape et solidaire dudit clapet secondaire. Sur ces figures 2a-2c, les mêmes éléments décrits en référence à la figure 1 sont présents. Ils sont référencés avec des primes pour dénoter la même séquence de références.

Ainsi, en référence aux figures 2a-2c, dans la partie inférieure 4' du corps de soupape 1', est disposé le clapet principal 7', monté mobile dans le passage de communication inférieur 5' et qui peut être ouvert ou fermé en fonction de la différence de pression entre la zone annulaire de la conduite et la chambre interne 6' de la soupape. Dans ce mode de réalisation, le clapet principal 7' comprend une tête 8' cylindro-conique et une base 9'. Dans ce mode de réalisation, la partie conique 10' de la tête 8' prend appui, en position de fermeture, telle qu'illustrée sur la figure 2a, sur un siège inférieur de clapet conique 11', formé par un épaulement conique ménagé sur la paroi interne du corps de soupape 1'. Cet appui est réalisé par l'intermédiaire d'un joint torique 16' logé dans une gorge annulaire ménagée dans la partie conique 10' de la tête 8' du clapet principal 7'. La partie cylindrique 41 de la tête 8' s'étend dans la chambre interne 6' du corps de soupape 1'. La partie cylindrique 41 prend appui, en position d'ouverture, telle qu'illustrée sur la figure 2b, sur l'extrémité inférieure du siège supérieur de clapet 40' formant un épaulement circulaire. En outre, la partie cylindrique 41 comporte sur sa circonférence, au moins une ouverture 43 ménagée à travers son épaisseur pour permettre le passage des gaz depuis la zone annulaire de la conduite vers la chambre interne 6' lors de l'ouverture du clapet principal 7'.

Un ressort principal 13', destiné à solliciter le clapet principal 7' dans sa position de fermeture, prend appui par une extrémité, sur un épaulement ménagé sur la tête 8' du clapet principal 7' et prend appui par son autre extrémité sur un épaulement ménagé au niveau du siège supérieur de clapet 40' pour le clapet secondaire 29', monté fixe à l'intérieur du corps de soupape 1' dans la partie supérieure de celui-ci. Le ressort principal 13' est donc logé à l'intérieur du volume défini par la chambre interne 6' et s'étend entre la tête 8' du clapet principal 7' et le siège supérieur de clapet 40'. Un guidage en mouvement du ressort principal 13' est réalisé par sa périphérie extérieure, par contact radial avec une paroi interne de la partie cylindrique 41 de la tête 8' cylindro-conique du clapet principal 7' mobile par rapport à la paroi interne du corps de soupape 1' dans la chambre interne 6'. De façon générale, le tarage de ce ressort principal 13' répond aux mêmes conditions que celles décrites en référence au ressort principal 13 dans le premier mode de réalisation.

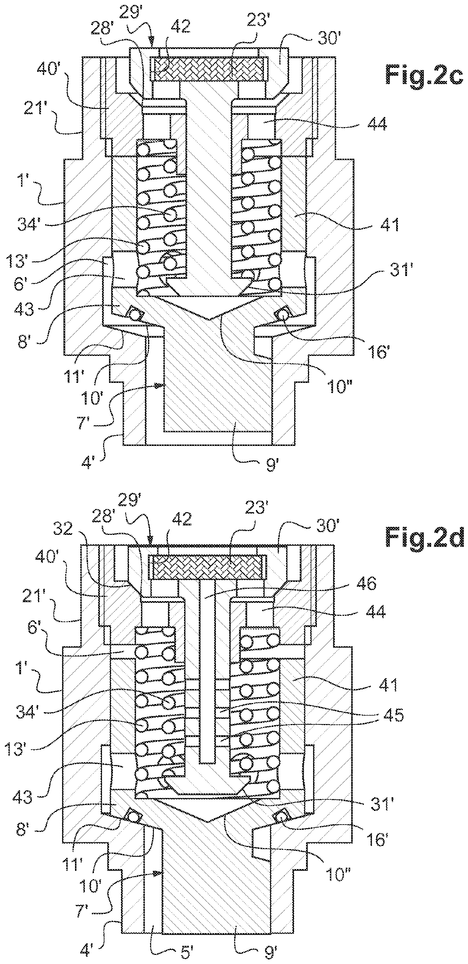

Dans la partie supérieure 21' du corps de soupape 1', la chambre interne 6' est prévue pour communiquer avec le milieu ambiant extérieur par l'intermédiaire du système d'évacuation principal des gaz constitué par la pièce poreuse 23', jouant le rôle de filtre et qui présente préférentiellement les mêmes caractéristiques de matériau que celles décrites en référence au mode de réalisation de la figure 1. Suivant ce deuxième mode de réalisation, la pièce poreuse 23' est donc montée solidaire du clapet secondaire 40' et, plus précisément, la pièce poreuse 23' présente une forme de disque et est logée dans un espace annulaire central 42 ménagé dans la tête 30' du clapet secondaire 29'. En outre, le clapet secondaire 29' comprend une ouverture annulaire 44 ménagée au niveau de sa tête 30' pour permettre la communication entre la chambre interne 6' et le milieu ambiant extérieur par l'intermédiaire de la pièce poreuse 23' lors de l'évacuation des gaz. En variante, l'ouverture annulaire 44 est remplacée par la présence de plusieurs trous ménagés dans la tête 30' du clapet secondaire 29'. Par ailleurs, le clapet secondaire 29' est monté mobile dans la partie supérieure 21' du corps de soupape 1', dans une ouverture centrale 28' du siège supérieur de clapet 40' avec lequel coopère le clapet secondaire 29' pour définir des positions d'ouverture et de fermeture du clapet secondaire 29', permettant respectivement d'autoriser (figure 2c) et d'empêcher (figure 2b) le passage des gaz depuis la chambre interne 6' vers l'extérieur au travers de ladite ouverture 28'. Pour ce faire, la partie conique 32' de la tête 30' cylindrico-conique du clapet secondaire 29' prend appui en position de fermeture sur une surface d'appui conique correspondante du siège supérieur de clapet 40' et un ressort secondaire 34' est destiné à solliciter le clapet secondaire 29' vers sa position de fermeture. Le ressort secondaire 34' s'étend à l'intérieur du ressort principal 13' et est monté solidaire, par une extrémité, de la base 31' du clapet secondaire 29' à l'opposé de sa tête 30' et prend appui, par son autre extrémité, sur un épaulement ménagé dans une partie centrale du siège supérieur de clapet 40'. Cet agencement des deux ressorts de rappel 13' et 34' vers la position de fermeture du clapet principal 7' et du clapet secondaire 29' permet un design particulièrement compact de la soupape. En outre, la tête 8' du clapet principal 7' comporte sur sa face supérieure, opposée à la partie conique 10', une zone tronquée 10", permettant de loger la base 31' du clapet secondaire 29' lorsque le clapet principal 7' est déplacé en position d'ouverture, tandis que le clapet secondaire 29' est maintenu en position de fermeture. Cette configuration des deux clapets principal et secondaire est illustrée sur la figure 2b.

Dans une variante du second mode de réalisation visible sur la figure 2d, une pluralité de trous débouchant sont ménagés dans le corps du clapet secondaire 29' et forment des canaux 45 latéraux. Les canaux 45 communiquent avec un canal central 46 longitudinal ménagé dans le corps du clapet secondaire 29' s'étendant en partie au niveau de sa base 31' jusque dans sa tête 30' cylindro-conique surplombant le corps du clapet secondaire et débouchant dans l'espace annulaire central 42, au contact de la pièce poreuse 23'.

L'ensemble des composants de la soupape différentielle selon l'invention tels que le corps de la soupape 1, 1', les clapets 7, 7' ; 29, 29', les ressorts 13, 13' ; 34, 34', les bagues de ressort 12 ; 33, les écrous 18 ; 24, les joints 16, 16' ; 20 ; 27, la rondelle d'appui 37, la pièce poreuse métallique 23, 23', le siège inférieur de clapet conique 11, 11', le siège supérieur de clapet 40, 40' sont tous réalisés à partir d'un matériau métallique ou polymérique possédant une excellente résistance chimique, notamment à la corrosion en milieux acides en présence de molécules de sulfure d'hydrogène (H₂S). En présence de ces molécules, on parle de condition « sour service ».

En effet, en condition « sour service », un volume plus ou moins important de molécules d'H₂S contenues dans le fluide d'hydrocarbures circulant à l'intérieur du passage d'écoulement de la conduite flexible diffuse au travers de la gaine de pression jusque dans la zone annulaire ou des molécules d'eau sont présentes. Partant, la réaction de ces molécules entre elles conduisent à l'apparition de phénomènes de corrosion au niveau des couches de renfort métallique de la conduite mais également au niveau de tous composants métallique et/ou polymérique en communication avec la zone annulaire.

Le fonctionnement de la soupape selon le premier ou le deuxième mode de réalisation de l'invention est le suivant, en référence à la figure 3. La soupape est donc conçue pour évacuer les gaz de l'amont vers l'aval, par rapport au sens d'évacuation des gaz, autrement dit, depuis l'espace annulaire de la conduite vers le milieu ambiant extérieur. Le corps de soupape 1, 1' le clapet principal 7, 7' et le clapet secondaire 29, 29' délimitent un volume de la chambre interne 6, 6' lorsque les clapets principal et secondaire sont tous les deux en position de fermeture. Dès que la différence de pression prédéterminée entre la pression régnant dans la zone annulaire de la conduite et la pression régnant dans la chambre interne 6, 6' de la soupape est égale ou supérieure à 1 bar ± 0,5 bar par exemple, le clapet principal 7, 7' monté dans la partie inférieure du corps de soupape en communication avec la zone annulaire, s'ouvre. De la sorte, les gaz sont acheminés depuis la zone annulaire de la conduite à travers le clapet principal 7, 7' en position d'ouverture, vers la chambre interne 6, 6', d'où ils s'échappent vers le milieu ambiant au travers de l'élément filtrant constitué par la pièce poreuse métallique 23, 23' les gaz diffusant à travers cette pièce poreuse métallique 23, 23' vers le milieu ambiant. La pièce poreuse métallique 23, 23' en monel® 400 selon le mode de réalisation préféré, permet d'évacuer les gaz vers l'extérieur tout en évitant que des particules solides, telles que les sédiments des fonds marins, ne pénètrent du côté aval dans la soupape et viennent obstruer l'évacuation des gaz. Dans ce mode de fonctionnement, qui est le mode de fonctionnement normal de la soupape, l'action du ressort secondaire 34, 34' est suffisante pour empêcher l'ouverture du clapet secondaire 29, 29' qui est donc maintenu en position de fermeture, de sorte que le passage vers l'extérieur au travers de l'ouverture centrale 28, 28' pratiquée dans le siège supérieur de clapet 40, 40'est fermé et, par défaut, les gaz s'échappent suivant un chemin d'évacuation principal 38 au travers de la pièce poreuse métallique 23, 23'.

Le fonctionnement de la soupape selon la variante du second mode de réalisation illustré sur la figure 2d diffère des premier et second mode précédemment décrits en ce que, dès lors que la différence de pression entre la zone annulaire de la conduite et la pression régnant dans la chambre interne 6' de la soupape devient trop importante, le clapet principal 7' s'ouvre et les gaz sont acheminés depuis la zone annulaire de la conduite vers la chambre interne 6'. Les gaz sont ensuite conduits au travers d'une part, l'ouverture annulaire 44 ménagée dans la tête 30' du clapet secondaire 29' et d'autre part, des différents canaux 45 latéraux puis du canal central 46 longitudinal, ladite ouverture annulaire 44 et ledit canal central 46 permettant tous les deux un passage vers l'élément filtrant constitué par la pièce poreuse métallique 23', les gaz diffusant alors à travers cette pièce poreuse métallique 23' vers le milieu ambiant. Dans cette variante, le chemin d'évacuation principal 38 depuis la chambre interne 6' vers le milieu ambiant extérieur en passant au travers de la pièce poreuse métallique 23' est assuré à la fois par l'ouverture annulaire 44 et partiellement par les canaux 45 ; 46 ménagés dans le corps dudit clapet secondaire 29'.

Par contre, lorsque le chemin d'évacuation principal 38 se trouve être obstrué, en cas de saturation de la pièce poreuse métallique 23, 23' soit que cette saturation résulte d'une obturation au moins partielle des pores de la pièce poreuse métallique 23, 23' par des particules solides et/ou organismes marins, soit qu'elle résulte d'un débit excessif des gaz à évacuer, alors la pression régnant dans la chambre interne 6, 6' de la soupape augmente et le ressort secondaire 34, 34' n'est plus suffisant pour empêcher l'ouverture du clapet secondaire 29, 29' inséré dans l'ouverture centrale 28, 28' du siège supérieur de clapet 40, 40'. De façon générale, le tarage du ressort secondaire 34, 34' et la section du clapet secondaire 29, 29' sont déterminés pour que l'ouverture du clapet secondaire 29, 29' soit effective dès que la pièce poreuse métallique est saturée générant une surpression dans la chambre interne.

Ainsi, le passage vers l'extérieur au travers de cette ouverture centrale 28, 28' est ouvert et les gaz introduits dans la chambre interne 6, 6' au travers du clapet principal 7, 7' s'échappent dans le milieu ambiant suivant un chemin d'évacuation secondaire 39 via le clapet secondaire 29, 29' à la suite de l'ouverture de celui-ci. Le clapet secondaire 29, 29' en position d'ouverture permet donc de former un chemin d'évacuation secondaire 39, ou de secours, pour évacuer les gaz au travers de ladite ouverture centrale 28, 28' ayant cheminés depuis la zone annulaire à travers le clapet principal 7, 7' lors de la saturation de la pièce poreuse métallique 23, 23' conduisant à obstruer le chemin d'évacuation principal 38 des gaz vers l'extérieur. A noter que le clapet secondaire 29, 29' n'est destiné à s'ouvrir que dans certaines circonstances particulières, où la pièce poreuse métallique 23, 23' est saturée et notamment, pour des débits importants de gaz à évacuer, de sorte que le risque d'introduction de particules solides par le côté aval est fortement réduit.

## Revendications

1. Soupape différentielle pour conduite tubulaire flexible sous-marine destinée au transport des hydrocarbures, ladite soupape étant destinée à l'évacuation vers l'extérieur de la conduite des gaz diffusant dans une zone annulaire de la conduite, ladite soupape comprenant un corps de soupape (1, 1') comportant une partie inférieure (4, 4') apte à communiquer avec ladite zone annulaire par un passage de communication inférieur (5, 5') et une partie supérieure (21, 21') apte à communiquer avec l'extérieur par au moins un chemin d'évacuation des gaz, le corps de soupape (1, 1') comprenant une chambre interne (6, 6') dans laquelle sont montés mobiles d'une part, un clapet principal (7, 7') entre une position d'ouverture et une position de fermeture dudit passage de communication inférieur et, d'autre part, un clapet secondaire (29, 29'), monté coaxial au clapet principal (7) et prenant appui sur un siège supérieur de clapet (40, 40'), entre une position d'ouverture et une position de fermeture dudit au moins un chemin d'évacuation, **caractérisée en ce que** ladite chambre interne (6, 6') communique avec l'extérieur de la conduite via un chemin d'évacuation principal (38) des gaz vers l'extérieur, ledit chemin d'évacuation principal (38) comportant une pièce poreuse (23, 23') servant de filtre, l'écoulement desdits gaz le long dudit chemin d'évacuation principal (38) à travers ladite pièce poreuse (23, 23') étant indépendant de la position d'ouverture ou de fermeture dudit clapet secondaire (29, 29').

2. Soupape selon la revendication 1, **caractérisée en ce que** ledit clapet secondaire (29, 29') coopère avec ledit siège supérieur de clapet (40, 40') de manière à ce que ledit clapet secondaire (29, 29') puisse s'ouvrir automatiquement en cas de saturation de ladite pièce poreuse (23, 23'), de sorte à former un chemin d'évacuation secondaire (39) des gaz vers l'extérieur depuis ladite chambre interne (6, 6') vers l'extérieur de la conduite.

3. Soupape selon la revendication 1 ou 2, **caractérisée en ce que** ladite pièce poreuse (23) est fixe et solidaire dudit corps de soupape (1).

4. Soupape selon l'une quelconque des revendications 1 à 3, **caractérisée en ce que** ladite pièce poreuse (23) forme au moins en partie ledit siège supérieur de clapet (40).

5. Soupape selon l'une quelconque des revendications précédentes, **caractérisée en ce que** ledit clapet principal (7) est sollicité vers la position de fermeture par un ressort principal (13) logé à l'intérieur d'un siège inférieur de clapet conique (11) pour le clapet principal (7), ledit ressort principal (13) prenant appui par une extrémité sur une bague de ressort (12) solidaire d'une partie inférieure (9) du clapet principal (7) et par l'autre extrémité sur un épaulement (14) ménagé à l'intérieur du siège inférieur de clapet conique (11).

6. Soupape selon la revendication 5, **caractérisée en ce que** ledit ressort principal (13) est guidé en mouvement par sa périphérie extérieure, par contact radial avec une paroi interne d'une partie inférieure cylindrique (19) dudit siège inférieur de clapet conique (11), dans laquelle ledit ressort principal (13) est logé.

7. Soupape selon l'une quelconque des revendications précédentes, **caractérisée en ce que** ledit clapet secondaire (29) est sollicité vers la position de fermeture par un ressort secondaire (34) prenant appui par une extrémité sur une bague de ressort (33) solidaire d'une partie inférieure (31) du clapet secondaire (29) et par l'autre extrémité sur un épaulement (35) ménagé dans une ouverture centrale (28) dudit siège supérieur de clapet dans laquelle est monté ledit clapet secondaire (29).

8. Soupape selon la revendication 7, **caractérisée en ce que** ledit ressort secondaire (34) est guidé en mouvement par sa périphérie extérieure, par contact radial avec une paroi interne d'un support cylindrique (36) monté sous ledit siège supérieur de clapet, dans lequel ledit ressort secondaire (34) est logé.

9. Soupape selon la revendication 1 ou 2, **caractérisée en ce que** ladite pièce poreuse (23') est montée solidaire dudit clapet secondaire (29).

10. Soupape selon la revendication 1 ou 2 ou 9, **caractérisée en ce que** ledit chemin d'évacuation principal (38) s'étend au moins en partie à l'intérieur du corps dudit clapet secondaire (29).

11. Soupape selon la revendication 1 ou 2 ou 9 ou 10, **caractérisée en ce que** ladite pièce poreuse (23') est agencée dans un espace annulaire (42) ménagé dans la tête (30') dudit clapet secondaire (29').

12. Soupape selon l'une quelconque des revendications précédentes, **caractérisée en ce que** ladite pièce poreuse (23, 23') est réalisée en un matériau métallique.

13. Soupape selon la revendication 12, **caractérisée en ce que** le matériau métallique est du Monel® 400.

14. Conduite tubulaire flexible sous-marine destinée au transport des hydrocarbures comprenant au moins une gaine interne de pression adaptée à véhiculer lesdits hydrocarbures, des gaz contenus dans lesdits hydrocarbures étant susceptibles de diffuser à travers la paroi de ladite gaine interne de pression, et comprenant une gaine externe et au moins une nappe de renfort située dans une zone annulaire comprise entre ladite gaine externe et ladite gaine interne de pression, ladite conduite comprenant un embout de connexion terminal pourvu d'un orifice d'évacuation des gaz au sein duquel est monté une soupape selon l'une quelconque des revendications précédentes.

## Patentansprüche

1. Differential-Ventil für flexible rohrförmige Unterwasser-Leitung für den Transport von Kohlenwasserstoffen, wobei das Ventil zur Ableitung nach außerhalb der Leitung der Gase bestimmt ist, die in einer ringförmigen Zone der Leitung diffundieren, wobei das Ventil einen Ventilkörper (1, 1') umfasst mit einem unteren Teil (4, 4'), der imstande ist, mit der ringförmigen Zone über einen unteren Verbindungskanal (5, 5') zu kommunizieren, und mit einem oberen Teil (21, 21'), der imstande ist, mit außerhalb über mindestens einen Ableitungsweg für die Gase zu kommunizieren, wobei der Ventilkörper (1, 1') eine innere Kammer (6, 6') umfasst, in der einerseits ein Hauptventil (7, 7') beweglich gelagert ist zwischen einer Stellung zum Öffnen und einer Stellung zum Schließen des unteren Verbindungskanals und andererseits ein Sekundärventil (29, 29'), das zu dem Hauptventil (7) koaxial gelagert ist und auf einem oberen Ventilsitz (40, 40') Abstützung findet, beweglich gelagert ist zwischen einer Stellung zum Öffnen und einer Stellung zum Schließen des Ableitungswegs, **dadurch gekennzeichnet, dass** die innere Kammer (6, 6') mit außerhalb der Leitung über einen Haupt-Ableitungsweg (38) für die Gase nach außen kommuniziert, wobei der Haupt-Ableitungsweg (38) ein poröses Teil (23, 23') aufweist, das als Filter dient, wobei das Strömen der Gase entlang des Haupt-Ableitungswegs (38) durch das poröse Teil (23, 23') hindurch von der Öffnungs- oder Schließstellung des Sekundärventils (29, 29') unabhängig ist.

2. Ventil nach Anspruch 1, **dadurch gekennzeichnet, dass** das Sekundärventil (29, 29') mit dem oberen Ventilsitz (40, 40') so zusammenwirkt, dass sich das Sekundärventil (29, 29') für den Fall der Sättigung des porösen Teils (23, 23') automatisch öffnen kann, um einen Sekundär-Ableitungsweg (39) für die Gase nach außen von der inneren Kammer (6, 6') nach außerhalb der Leitung zu bilden.

3. Ventil nach Anspruch 1 oder 2, **dadurch gekennzeichnet, dass** das poröse Teil (23) feststehend ist und mit dem Ventilkörper (1) fest verbunden ist.

4. Ventil nach einem der Ansprüche 1 bis 3, **dadurch gekennzeichnet, dass** das poröse Teil (23) mindestens teilweise den oberen Ventilsitz (40) bildet.

5. Ventil nach einem der vorhergehenden Ansprüche, **dadurch gekennzeichnet, dass** das Hauptventil (7) in die Schließstellung beaufschlagt wird durch eine Hauptfeder (13), die im Inneren eines konischen unteren Ventilsitzes (11) für das Hauptventil (7) aufgenommen ist, wobei die Hauptfeder (13) über ein Ende auf einem Federring (12) Abstützung findet, der mit einem unteren Teil (9) des Hauptventils (7) fest verbunden ist, und über das andere Ende auf einem Absatz (14) Abstützung findet, der im Inneren des konischen unteren Ventilsitzes (11) ausgebildet ist.

6. Ventil nach Anspruch 5, **dadurch gekennzeichnet, dass** die Hauptfeder (13) in ihrer Bewegung über ihren Außenumfang geführt wird durch radialen Kontakt mit einer Innenwand eines zylindrischen unteren Teils (19) des konischen unteren Ventilsitzes (11), in dem die Hauptfeder (13) aufgenommen ist.

7. Ventil nach einem der vorhergehenden Ansprüche, **dadurch gekennzeichnet, dass** das Sekundärventil (29) in die Schließstellung beaufschlagt wird durch eine Sekundärfeder (34), die über ein Ende auf einem Federring (33) Abstützung findet, der mit einem unteren Teil (31) des Sekundärventils (29) fest verbunden ist, und über das andere Ende auf einem Absatz (35) Abstützung findet, der in einer mittigen Öffnung (28) des oberen Ventilsitzes, in dem das Sekundärventil (29) gelagert ist, ausgebildet ist.

8. Ventil nach Anspruch 7, **dadurch gekennzeichnet, dass** die Sekundärfeder (34) in ihrer Bewegung über ihren Außenumfang geführt wird durch radialen Kontakt mit einer Innenwand eines zylindrischen Trägers (36), der unter dem oberen Ventilsitz gelagert ist, in dem die Sekundärfeder (34) aufgenommen ist.

9. Ventil nach Anspruch 1 oder 2, **dadurch gekennzeichnet, dass** das poröse Teil (23') mit dem Sekundärventil (29) fest verbunden gelagert ist.

10. Ventil nach Anspruch 1 oder 2 oder 9, **dadurch gekennzeichnet, dass** sich der Haupt-Ableitungsweg (38) mindestens teilweise im Inneren des Körpers des Sekundärventils (29) erstreckt.

11. Ventil nach Anspruch 1 oder 2 oder 9 oder 10, **dadurch gekennzeichnet, dass** das poröse Teil (23') in einem ringförmigen Raum (42) angeordnet ist, der in dem Kopf (30') des Sekundärventils (29') ausgebildet ist.

12. Ventil nach einem der vorhergehenden Ansprüche, **dadurch gekennzeichnet, dass** das poröse Teil (23, 23') aus einem metallischen Werkstoff realisiert ist.

13. Ventil nach Anspruch 12, **dadurch gekennzeichnet, dass** der metallische Werkstoff Monel® 400 ist.

14. Flexible rohrförmige Unterwasser-Leitung für den Transport von Kohlenwasserstoffen, umfassend mindestens einen Druckmantel, der für den Transport der Kohlenwasserstoffe eingerichtet ist, wobei die in den Kohlenwasserstoffen enthaltenen Gase durch die Wandung des inneren Druckmantels hindurch diffundieren können, und umfassend einen äußeren Mantel und mindestens eine Verstärkungseinlage, die sich in einer ringförmigen Zone zwischen dem äußeren Mantel und dem inneren Druckmantel befindet, wobei die Leitung einen Anschlussendstutzen umfasst, der mit einer Öffnung zur Ableitung der Gase versehen ist in der ein Ventil nach einem der vorhergehenden Ansprüche gelagert ist.

## Claims

1. A differential valve for an underwater flexible tubular pipe intended for transporting hydrocarbons, said valve being intended for discharging to outside the pipe gases that diffuse into an annular zone of the pipe, said valve comprising a valve body (1, 1') comprising a lower part (4, 4') able to communicate with said annular zone via a lower communication passage (5, 5') and an upper part (21, 21') able to communicate with the outside via at least one gas discharge path, the valve body (1, 1') comprising an internal chamber (6, 6') in which there are mounted, on the one hand, a main valve shutter (7, 7') able to move between a position in which said lower communication passage is open and a position in which same is closed and, on the other hand, a secondary valve shutter (29, 29'), mounted coaxial with the main valve shutter (7) and bearing against an upper valve seat (40, 40'), and able to move between a position in which said at least one discharge path is open and a position in which same is closed, **characterized in that** said internal chamber (6, 6') communicates with the outside of the pipe via a main discharge path (38) discharging the gases to the outside, said main discharge path (38) comprising a porous component (23, 23') acting as a filter, the flow of said gases along said main discharge path (38) through said porous component (23, 23') being independent of whether said secondary valve shutter (29, 29') is in the open or in the closed position.

2. The valve as claimed in claim 1, **characterized in that** said secondary valve shutter (29, 29') collaborates with said upper valve seat (40, 40') in such a way that said secondary valve shutter (29, 29') can open automatically if said porous component (23, 23') becomes saturated, so as to form a secondary discharge path (39) for discharging gases to the outside from said internal chamber (6, 6') toward the outside of the pipe.

3. The valve as claimed in claim 1 or 2, **characterized in that** said porous component (23) is fixed and secured to said valve body (1).

4. The valve as claimed in any one of claims 1 to 3, **characterized in that** said porous component (23) at least partially forms said upper valve seat (40).

5. The valve as claimed in any one of the preceding claims, **characterized in that** said main valve shutter (7) is urged toward the closed position by a main spring (13) housed inside a conical lower valve seat (11) for the main valve shutter (7), said main spring (13) bearing via one end against a spring collar (12) secured to a lower part (9) of the main valve shutter (7) and via the other end on a shoulder (14) formed inside the conical lower valve seat (11).

6. The valve as claimed in claim 5, **characterized in that** said main spring (13) is guided in movement via its exterior periphery, through radial contact with an internal wall of a cylindrical lower part (19) of said conical lower valve seat (11), in which lower part said main spring (13) is housed.

7. The valve as claimed in any one of the preceding claims, **characterized in that** said secondary valve shutter (29) is urged toward the closed position by a secondary spring (34) bearing via one end on a spring collar (33) secured to a lower part (31) of the secondary valve shutter (29) and via the other end on a shoulder (35) formed in a central opening (28) of said upper valve seat, in which opening said secondary valve shutter (29) is mounted.

8. The valve as claimed in claim 7, **characterized in that** said secondary spring (34) is guided in movement by its exterior periphery, by radial contact with an internal wall of a cylindrical support (36) mounted under said upper valve seat, in which support said secondary spring (34) is housed.

9. The valve as claimed in claim 1 or 2, **characterized in that** said porous component (23') is mounted secured to said secondary valve shutter (29).

10. The valve as claimed in claim 1 or 2 or 9, **characterized in that** said main discharge path (38) extends at least in part inside the body of said secondary valve shutter (29).

11. The valve as claimed in claim 1 or 2 or 9 or 10, **characterized in that** said porous component (23') is arranged in an annular space (42) formed in the head (30') of said secondary valve shutter (29').

12. The valve as claimed in any one of the preceding claims, **characterized in that** said porous component (23, 23') is made of a metallic material.

13. The valve as claimed in claim 12, **characterized in that** the metallic material is Monel® 400.

14. An underwater flexible tubular pipe intended for transporting hydrocarbons, comprising at least an internal pressure sheath designed to carry said hydrocarbons, gases contained in said hydrocarbons being capable of diffusing across the wall of said internal pressure sheath, and comprising an external sheath and at least one reinforcing layer situated in an annular zone comprised between said external sheath and said internal pressure sheath, said pipe comprising a connection end fitting provided with a gas discharge orifice in which there is mounted a valve as claimed in any one of the preceding claims.
